(19) **Europäisches Patentamt**
**European Patent Office**
**Office européen des brevets**

(11) **EP 1 873 717 B1**

(12) **EUROPEAN PATENT SPECIFICATION**

(45) Date of publication and mention
of the grant of the patent:
**26.08.2009 Bulletin 2009/35**

(51) Int Cl.:
*G06T 7/00* *(2006.01)*    *G06T 3/00* *(2006.01)*

(21) Application number: **07110969.8**

(22) Date of filing: **25.06.2007**

(54) **Method to estimate the geometric distortion between two images**

Verfahren zur Abschätzung der geometrischen Verzerrung zwischen zwei Bildern

Procédé d'estimation de la distorsion géométrique entre deux images

(84) Designated Contracting States:
**DE FR GB**

(30) Priority: **30.06.2006 EP 06300734**

(43) Date of publication of application:
**02.01.2008 Bulletin 2008/01**

(73) Proprietor: **Thomson Licensing**
**92100 Boulogne-Billancourt (FR)**

(72) Inventors:
  • **Chupeau, Bertrand**
    **92648 Boulogne Cedex (FR)**
  • **Oisel, Lionel**
    **92648 Boulogne Cedex (FR)**
  • **Massoudi, Ayoub**
    **92648 Boulogne Cedex (FR)**

(74) Representative: **Le Dantec, Claude**
**Thomson**
**European Patent Operations**
**46 Quai Alphonse Le Gallo**
**92648 Boulogne-Billancourt (FR)**

(56) References cited:
**US-B1- 6 504 569**    **US-B1- 6 975 755**

• **HOUQIN BIAN ET AL: "Feature Matching Based on Geometric Constraints in Stereo Views of Curved Scenes" INTELLIGENT ROBOTS AND SYSTEMS, 2005. (IROS 2005). 2005 IEEE/RSJ INTERNATIONAL CONFERENCE ON EDMONTON, AB, CANADA 02-06 AUG. 2005, PISCATAWAY, NJ, USA,IEEE, 2 August 2005 (2005-08-02), pages 947-952, XP010857198 ISBN: 0-7803-8912-3**
• **MCGLONE J.C., MIKHAIL E.M., BETHEL J., MULLEN R.: "Manual of Photogrammetry" 2004, AMERICAN SOCIETY FOR PHOTOGRAMMETRY AND REMOTE SENSING , BETHSEDA, MARYLAND, USA , XP002454890 * sections 6.3.4, 6.3.6.3 ***

**Description**

The invention concerns a method to estimate the geometric distortion of an image and a method to match pixels in a reference image and in a target image.

Image registration, in other words the process of geometrically aligning two or more images of the same scene, e.g. taken at different times, from different viewpoints, and/or by different sensors, has been tackled by the image processing and computer vision communities for a long time. The majority of registration methods consist of the four following steps:

- Feature detection: salient and distinctive objects (edges, contours, corners...) are detected in both images.
- Feature matching: correspondence is established between features detected in reference and distorted images.
- Transform model estimation: the parameters of the mapping function (distortion model) are estimated from the spatial locations of matched pairs of salient features.
- Image transformation: the distorted image is transformed by means of the mapping function and registered with the reference image.

Whereas a lot of papers have been published on feature detection, the matching step is most of the time not detailed. Document XP 010857198 and document "Manual of photogrammetry" editors Mc Glone et al., ASPRS, 2004, pages 492-504 describe feature-based matching methods.

The invention concerns the feature matching step.

One application of interest, among many others, is the registration (also called resynchronization) of pirate videos with reference content for recovering forensic tracking (water)marks. In the case of camcorder capture in a theater, indeed, very severe trapezoidal distortion appear when the viewing angle was not perpendicular to the screen, most of the time followed by cropping and resizing. The registration of the pirate content with the reference content is a prerequisite, before recovering the marks (that identify, e.g., the theater).

The invention proposes a method according to claim 1.

Preferentially, the matching step comprises a further step of discarding couple of control points which distance is not significantly lower than the second best match distance for these control points.

According to the preferred embodiment, the method comprises a step of entering manually a number of matching points pairs by using a graphical interface.

Advantageously, the method comprises a step of computing a distortion model from the manually selected matching points pairs.

In a preferred embodiment, the method comprises a step of modifying the distance between the control points according to the following formula:

$$\begin{cases} if\, \|P1 - M^{-1}(P2)\| \leq T & d'(F1, G2) = d(F1, G2) \\ else & d'(F1, G2) = +\infty \end{cases}$$

With P1 being the point in the reference image,
P2 being the matched point of P1 in the distorted image obtained during the matching step,
F1 and G2 being the feature vectors associated with P1 and P2 respectively,
T being a predetermined threshold.

In a preferred embodiment, the distance is calculated according to the following formula:

$$d(F, G) = \frac{1}{M} \sum_{i=1}^{M} |f_i - g_i|,$$

F being the feature vector of the control points of the reference image,
G being the feature vector of the control points of the distorted image.
M being the distorsion model
d' being the modified distance
d being the original distance,
and $\|\,\|$ being the norm.

In another embodiment, the distance is the Euclidian distance.

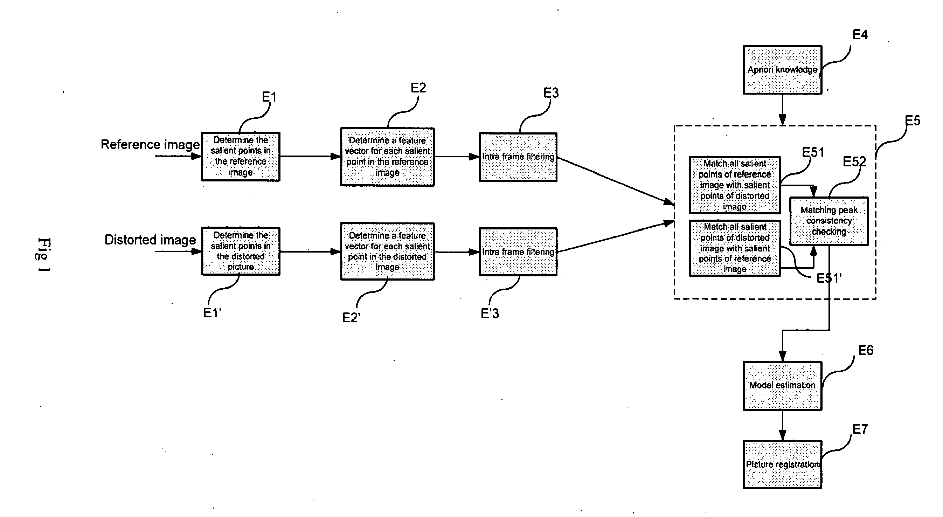

Other characteristics and advantages of the invention will appear through the description of a non-limiting embodiment of the invention, which will be illustrated, with the help of the enclosed unique figure 1 representing a system for determining the geometric distortion between two images implementing a salient point matching step according to the invention,

Embodiments of the present invention may be implemented in software, firmware, hardware or by any combination of various techniques. For example, in some embodiments, the present invention may be provided as a computer program product or software which may include a machine or computer-readable medium having stored thereon instructions which may be used to program a computer (or other electronic devices) to perform a process according to the present invention. In other embodiments, steps of the present invention might be performed by specific hardware component that contain hardwired logic for performing the steps, or by any combination of programmed computer components and custom hardware components.

Thus, a machine-readable medium may include any mechanism for storing or transmitting information in a form readable by a machine (for instance a computer). These mechanisms include, but are not limited to, floppy diskettes, optical disks, hard disk drives, holographic disks, compact disks read-only memory (CD-ROMs), magneto-optical disks, read-only memory (ROMs), random access memory (RAM), Erasable Programmable Read-only memory (EEPROM), magnetic or optical cards, flash memory, a transmission over the Internet, electrical, optical, acoustical or other forms of propagated signals (for instance carrier waves, infrared signals, digital signals, etc), or the like.

Unless specifically stated otherwise as apparent from the following discussion, it is appreciated that discussions utilizing terms such as "processing" or "computing" or "calculating" or "determining" or the like, may refer to the action and processes of a computer system, or similar electronic computing device, that manipulates and transforms data represented as physical quantities within the computer system memories or registers or other such information storage, transmission or display devices.

In the following detailed description of the embodiments, reference is made to the accompanying drawings that show, by way of illustration, specific embodiments in which the invention may be practices. In the drawings, like numeral describe substantially similar components throughout the several views. These embodiments are described in sufficient detail to enable those skilled in the art to practice the invention. Other embodiments may be utilized and structural, logical, and electrical changes may be made without departing from the scope of the present invention. Moreover, it is to be understood that the various embodiments of the invention, although different, are not necessarily mutually exclusive. For example, a particular feature, structure, or characteristic described in one embodiment may be included within other embodiments.

On figure 1, a particular embodiment of the invention applied to the geometric distortion is represented.

In a step E1 (respectively E'1), the salient points of a reference image (respectively of a distorted image) are determined. A method for determining the salient points of an image is described in the international patent application WO05/059832 filed in the name of Thomson Licensing SA and published on June 30, 2005. As output of step E1 (respectively E'1), we get a list of salient points L1, respectively L2.

$$L1 = \left\{ P_1^{\,p} = (x_1, y_1)_p, p = 1..N_1 \right\}$$

$$L2 = \left\{ P_2^{\,n} = (x_2, y_2)_n, n = 1..N_2 \right\}$$

In another embodiment of step E1, a DOG detector can be used in order to detect the salient points by building a multi scale representation of an image, the points of interest being detected by finding local extrema of difference of Gaussian functions. Such a detector shows good detection performance repeatability against luminance and contrast changes, rotations and severe zoom.

During a step E2, (respectively E'2), a feature vector F (respectively G) of size M, is computed for each of the salient points obtained previously in steps E1 and E'1.

$$F = (f_1, f_2, .., f_M)$$

$$G = (g_1, g_2, .., g_M)$$

A method for computing feature vectors is described in the document of David G. Lowe "Distinctive image features from scale invariant keypoints", published in the International Journal of Computer Vision, 60, 2 (2004), pp. 91-110. Such a method computes a local descriptor based on the gradient vectors orientation distribution in a local neighborhood. Preferentially, the feature vector can also introduce spatial criteria. Therefore points located in a totally different area in both images will have no chance to match.

During a step E3, respectively E'3, an intra-filtering of the salient points is computed in order to reduce the false detection of salient points.

Some of the salient points obtained in step E1 and E'1 are discarded.

In a local neighborhood, only a single salient point is kept, for instance the salient point having the maximum detection response.

For each salient point in the picture, if other salient points located elsewhere in the image have a similar feature vectors, they are discarded. This can happen for instance in an image containing a building with windows, each window corner is characterized by the same descriptors, and matching salient points with similar descriptors between two pictures lead to random results;

During a step E5, the salient points of the two images are put in correspondence. This step enables to reduce considerably the false matches introduced by classical methods of naïve matching. A naïve matching procedure is to scan the shortest list and, for each point, to match with the point in the other list that minimize the feature distance. With such a method, two points of the first list can be matched with the same point of the second list. If the number of false matches is too high, it is impossible to estimate the distortion model, even with a robust procedure that rejects erroneous input data.

Advantageously, for this, step E5 comprises three sub-steps E51, E51', E52.

In a step E51, for each point P1 in the first list, one finds the point P2 in the second list that minimizes the feature distance with it.

The feature distance can be calculated by using different methods.

According to this embodiment, the distance is calculated according to the following formula:

$$d(F,G) = \frac{1}{M} \sum_{i=1}^{M} |f_i - g_i|$$

According to another embodiment, the distance used is the Euclidian distance:

$$d(F,G) = \frac{1}{M} \sum_{i=1}^{M} (f_i - g_i) * (f_i - g_i)$$

In a step E'51, for each point P2 in the second list, one finds the point P'1 in the first list that minimizes the feature distance with it.

If P1 and P'1 are the same points, or are closely located, closely meaning here in the preferred embodiment that they are not more than two pixels far away from each other, it means that P1 and P2 are the points corresponding to each other in the reference image and in the distorted image.

In a step E52, a refinement of the list of pixels put into correspondence is done. The relative difference between the minimum feature distance dmin1 and the second minimum distance dmin2 is calculated according to the following formula:

$$\frac{d \min 2 - d \min 1}{d \min 1}$$

If this difference is higher than $\alpha$, $\alpha$ being equal to 20% in this embodiment, the pairs of points having $d_{min1}$ has minimum distance is kept as matched points.

Such a matching process is very efficient compared to existing matching processes. It can be used for other applications. Therefore, the matching step proposed here constitutes itself an innovative aspect of the invention, disconnected to its application to the distortion method.

The matching process described so far makes no restriction on the pixel locations, which means that no hypothesis is done on the distortion.

With "nice" picture content, that is enough details, spread over the full picture extent, good automatic matching performance will be obtained. On pictures with salient points localized in a given subpart, or with repetitive patterns making the salient point features not discriminant, results can be improved by introducing a priori knowledge on the spatial distortion.

In a step E4, which is optional, a help can be given in order to match more accurately the salient points in the two images. Several embodiments can be foreseen, these embodiments can be combined.

A user can enter a manual selection of a set of matching pixels pair, for example by mouse click in a graphical user interface displaying side by side the reference and distorted pictures. The minimum number of matching pairs depends on the dimension of the distortion model: 3 pairs for a 6-dimensional affine model, 4 pairs for a 8-dimensional homographic model, etc.

By entering the points manually, the user introduces also spatial constraints.

After the selection of pixels, a raw distortion model M() can be estimated. This estimation has not to be very accurate: in particular the mouse-selection of pixels has not to be pixel accurate.

Letting F(P1), being feature vector computed at salient point P1 in reference image, G(P2), being feature vector computed at salient point P2 in distorted picture, M() being the distortion model mapping a pixel of reference picture with a pixel of distorted picture, and $M^{-1}()$ the inverse mapping function, this new feature distance $d'()$ can be written as follows:

$$\begin{cases} if \left\| P1 - M^{-1}(P2) \right\| \leq T & d'(F1, F2) = d(F1, F2) \\ else & d'(F1, F2) = +\infty \end{cases}$$

T being a threshold, equal to 10 in this embodiment.

Therefore, the points which have a distance d' which is infinite are not considered as being matching points. They are discarded.

During a step E6, one estimates then the parametric distortion model from the final list of matched salient points. For example, an 8-dimensional homographic model maps (x,y) coordinates to (x',y') as follows:

$$\begin{cases} x' = \dfrac{h_0 x + h_1 y + h_2}{h_6 x + h_7 y + 1} \\ y' = \dfrac{h_3 x + h_4 y + h_5}{h_6 x + h_7 y + 1} \end{cases}$$

The coefficients ($h_j$) that best fit to the input data {(x,y), (x',y')} can be estimated by simple mean squares estimation, but it is preferable to use a robust method able to reject erroneous input data, also called outliers.

In a step E7, the distorted picture is registered thanks to the estimation model obtained previously in step E6. It is registered by applying the inverse mapping function that was estimated in step E6.

The innovative matching step E5 has been described in the context of a distortion method. However, the matching step can be applied to other applications.

More generally, this matching step can be applied by using not only salient points of images but can use other selected pixels. For instance the selected points can also be points selected according to other criteria. They can be points having a luminance comprised in a certain range, or selected according to their texture or other parameters the man skilled in the art can envisage. For instance, these points can be the center of gravity of some areas, the end of lines, corners... More generally, these points are called "control points".

Therefore, despite the distortion method has been described by using salient points, it can be applied to any pixel selected according to another criterion.

Most of the applications are dedicated to image registration, in the field of computer vision, medical imaging, cartography, images mosaic, temporal changes detection, super-resolution images.

**Claims**

1. Method to estimate the geometric distortion between a reference image and a distorted image comprising the steps of

   - determining control points in each of the images,
   - determining for each of these control points a feature vector,
   - discarding in the reference image all the control points having similar feature vectors,
   - discarding in the distorted image all the control points having similar feature vectors,
   - defining a neighborhood around some of the control points and keeping only one control point in said neighborhood.
   - matching only the kept control points of the two images according to the distance of their feature vectors,
   - establishing a distortion model from the matched control points of the two images, wherein

   the matching step comprises the sub-steps of

   - finding a match point in the distorted image for each control point of the reference image obtaining a first list of couples of matched points,
   - finding a match point in the reference image for each control point of the distorted image obtaining a second list of couples of matched points,
   - keeping as matched control points only the control points which belong to couples which are in both lists.

2. Method according to claim 1 **characterized in that** the matching step comprises a further step of discarding couple of control points which distance is not significantly lower than the second best match distance for these control points.

3. Method according to one of the preceding claims **characterized in that** it comprises, a step of entering manually a number of matching points pairs by using a graphical interface.

4. Method according to claim 3 **characterized in that** it comprises a step of computing a distortion model from the manually selected matching points pairs.

5. Method according to claim 4 **characterized in that** it comprises a step of modifying the distance between the control points according to the following formula:

$$\begin{cases} if \left\| P1 - M^{-1}(P2) \right\| \le T & d'(F1, G2) = d(F1, G2) \\ else & d'(F1, G2) = +\infty \end{cases}$$

With P1 being the point in the reference image,
P2 being the matched point of P1 in the distorted image obtained during the matching step,
F1 and G2 being the feature vectors associated with P1 and P2 respectively,
T being a predetermined threshold
M being the distorsion model,
d' being the modified distance,
d being the original distance,
And $\| \ \|$ being the norm.

6. Method according to one of the preceding claims **characterized in that** the distance is calculated according to the following formula:

$$d(F,G) = \frac{1}{M}\sum_{i=1}^{M}\left|f_i - g_i\right|,$$

F being the feature vector of the control points of the reference image,
G being the feature vector of the control points of the distorted image.

7. Method according to one of claims 1 to 6 **characterized in that** the distance is the Euclidian distance.


**Patentansprüche**

1. Verfahren zur Abschätzung der geometrischen Verzerrung zwischen einem Referenzbild und einem verzerrten Bild, wobei das Verfahren die folgenden Schritte umfasst:

   - Bestimmen von Kontrollpunkten in jedem der Bilder,
   - Bestimmen eines Merkmalsvektors für jeden dieser Kontrollpunkte,
   - Verwerfen aller Kontrollpunkte mit ähnlichen Merkmalsvektoren in dem Referenzbild,
   - Verwerfen aller Kontrollpunkte mit ähnlichen Merkmalsvektoren in dem verzerrten Bild,
   - Definieren einer Nachbarschaft um einige der Kontrollpunkte und Aufbewahren nur eines Kontrollpunkts in der Nachbarschaft,
   - Anpassen nur der aufbewahrten Kontrollpunkte der zwei Bilder gemäß dem Abstand ihrer Merkmalsvektoren,
   - Festsetzen eines Verzerrungsmodells aus den angepassten Kontrollpunkten der zwei Bilder, wobei der Anpassungsschritt die folgenden Teilschritte umfasst:

      - Ermitteln eines Anpassungspunkts in dem verzerrten Bild für jeden Kontrollpunkt des Referenzbilds, wobei eine erste Liste von Paaren angepasster Punkte erhalten wird,
      - Ermitteln eines Anpassungspunkts in dem Referenzbild für jeden Kontrollpunkt des verzerrten Bilds, wobei eine zweite Liste von Paaren angepasster Punkte erhalten wird,
      - Aufbewahren nur derjenigen Kontrollpunkte, die Paaren angehören, die in beiden Listen sind, als angepasste Kontrollpunkte.

2. Verfahren gemäß Anspruch 1, **dadurch gekennzeichnet, dass** der Anpassungsschritt einen weiteren Schritt des Verwerfens eines Paars von Kontrollpunkten umfasst, dessen Abstand nicht wesentlich kleiner als der Abstand der zweitbesten Anpassung für diese Kontrollpunkte ist.

3. Verfahren gemäß einem der vorstehenden Ansprüche, **dadurch gekennzeichnet, dass** es einen Schritt des manuellen Eingebens einer Anzahl angepasster Punktpaare unter Verwendung einer graphischen Schnittstelle umfasst.

4. Verfahren gemäß Anspruch 3, **dadurch gekennzeichnet, dass** es einen Schritt des Berechnens eines Verzerrungsmodells aus den manuell ausgewählten angepassten Punktpaaren umfasst.

5. Verfahren gemäß Anspruch 4, **dadurch gekennzeichnet, dass** es einen Schritt des Änderns des Abstands zwischen den Kontrollpunkten gemäß der folgenden Formel umfasst:

$$\begin{cases} wenn \; \left\| P1 \; \square \; M^{\square 1}(P2) \right\| \; \square \; T \quad d'(F1, G2) \; \square \; d(F1, G2) \\ \qquad sonst \; d'(F1, G2) \; \square \; \square\square \end{cases}$$

wobei P1 der Punkt in dem Referenzbild ist,
P2 der während des Anpassungsschritts erhaltene angepasste Punkt von P1 in dem verzerrten Bild ist,
F1 und G2 die P1 bzw. P2 zugeordneten Merkmalsvektoren sind,
T ein vorgegebener Schwellenwert ist,
M das Verzerrungsmodell ist,
d' der geänderte Abstand ist,

d der ursprüngliche Abstand ist,
und ‖ ‖ die Norm ist.

6. Verfahren gemäß einem der vorstehenden Ansprüche, **dadurch gekennzeichnet, dass** der Abstand gemäß der folgenden Formel berechnet wird:

$$d(F, G) \ \square \ \frac{1}{M} \ \sum_{i \square 1}^{M} \left| f_i \ \square \ g_i \right|,$$

wobei F der Merkmalsvektor der Kontrollpunkte des Referenzbilds ist,
G der Merkmalsvektor der Kontrollpunkte des verzerrten Bilds ist.

7. Verfahren gemäß einem der Ansprüche 1 bis 6, **dadurch gekennzeichnet, dass** der Abstand der euklidische Abstand ist.

## Revendications

1. Procédé d'estimation de la distorsion géométrique entre une image de référence et une image distordue comprenant les étapes de

- déterminer des points de contrôle dans chacune des images,
- déterminer pour chacun de ces points de contrôle un vecteur de caractéristiques,
- rejeter de l'image de référence tous les points de contrôle présentant des vecteurs de caractéristiques similaires,
- rejeter de l'image distordue tous les points de contrôle comportant des vecteurs de caractéristiques similaires,
- définir un voisinage autour de certains des points de contrôle et conserver un seul point de contrôle dans ledit voisinage,
- faire correspondre uniquement les points de contrôle conservés des deux images en fonction de la distance de leurs vecteurs de caractéristiques,
- établir un modèle de distorsion à partir des points de contrôle mis en correspondance des deux images, dans lequel

l'étape de mise en correspondance comprend les sous-étapes consistant à

- trouver un point de correspondance dans l'image distordue pour chaque point de contrôle de l'image de référence et obtenir une première liste de couples de points mis en correspondance,
- trouver un point de correspondance dans l'image de référence pour chaque point de contrôle de l'image distordue et obtenir une seconde liste de couples de points mis en correspondance,
- conserver comme points de contrôle mis en correspondance uniquement les points de contrôle qui appartiennent à des couples présents dans les deux listes.

2. Procédé selon la revendication 1 **caractérisé en ce que** l'étape de mise en correspondance comprend une étape supplémentaire de rejet de couple de points de contrôle dont la distance n'est pas de manière significative inférieure à la seconde meilleure distance de correspondance pour ces points de contrôle.

3. Procédé selon une des revendications précédentes **caractérisé en ce qu'**il comprend une étape consistant à saisir manuellement un certain nombre de paires de points mis en correspondance en utilisant une interface graphique.

4. Procédé selon la revendication 3 **caractérisé en ce qu'**il comprend une étape consistant à calculer un modèle de distorsion à partir des paires de points de mise en correspondance sélectionnées manuellement.

5. Procédé selon la revendication 4 **caractérisé en ce qu'**il comprend une étape consistant à modifier la distance entre les points de contrôle conformément à la formule suivante :

$$\begin{cases} si\ \left\| P1 \square M^{\square 1}(P2) \right\| \square T \quad d'(F1,G2) \square d(F1,G2) \\ sinon\ d'(F1,G2) \square \square \square \end{cases}$$

Avec P1 étant le point dans l'image de référence,
P2 étant le point mis en correspondance de P1 dans l'image distordue obtenu lors de l'étape de mise en correspondance,
F1 et G2 étant les vecteurs de caractéristiques associés à P1 et P2 respectivement,
T étant un seuil prédéterminé,
M étant le modèle de distorsion,
d' étant la distance modifiée,
d étant la distance initiale,
Et ‖ ‖ étant la norme.

6.  Procédé selon une des revendications précédentes, **caractérisé en ce que** la distance est calculée selon la formule suivante :

$$d(F,G) = \frac{1}{M} \sum_{i=1}^{M} \left| f_i - g_i \right|,$$

F étant le vecteur de caractéristiques des points de contrôle de l'image de référence,
G étant le vecteur de caractéristiques des points de contrôle de l'image distordue.

7.  Procédé selon une des revendications 1 à 6, **caractérisé en ce que** la distance est la distance euclidienne.

Fig 1

Reference image → **E1** Determine the salient points in the reference image → **E2** Determine a feature vector for each salient point in the reference image → **E3** Intra frame filtering

Distorted image → **E1'** Determine the salient points in the distorted picture → **E2'** Determine a feature vector for each salient point in the distorted image → **E'3** Intra frame filtering

**E4** Apriori knowledge

**E5**
- **E51** Match all salient points of reference image with salient points of distorted image
- **E51'** Match all salient points of distorted image with salient points of reference image
- **E52** Matching peak consistency checking

**E6** Model estimation

**E7** Picture registration

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05059832 A

**Non-patent literature cited in the description**

- Manual of photogrammetry. ASPRS. 2004, 492-504

- **David G. Lowe.** Distinctive image features from scale invariant keypoints. *International Journal of Computer Vision,* 2004, vol. 60 (2), 91-110